# EUROPÄISCHE PATENTSCHRIFT

(11) **EP 3 559 639 B1**
(45) Veröffentlichungstag und Bekanntmachung des Hinweises auf die Patenterteilung: **17.08.2022**
(21) Anmeldenummer: 17822235.2
(22) Anmeldetag: 14.12.2017
(51) Int. Cl.: G01N 21/64, G01N 35/10

(54) **VERFAHREN UND SYSTEM FÜR MESSUNGEN IM HOCHDURCHSATZ-SCREENING MIT HOHER ZEITAUFLÖSUNG**
METHOD AND SYSTEM FOR MEASUREMENTS OF HIGH THROUGHPUT SCREENING WITH HIGH TIME RESOLUTION
PROCÉDÉ ET SYSTÈME POUR MESURES DANS LE CRIBLAGE À HAUT DÉBIT À HAUTE RÉSOLUTION TEMPORELLE

(30) Priorität: 21.12.2016 DE 102016225817
(43) Veröffentlichungstag der Anmeldung: 30.10.2019
(73) Patentinhaber: Bayer Pharma Aktiengesellschaft, 13353 Berlin (DE)
(72) Erfinder: SCHADE, Andreas, 45277 Essen (DE); KÜSTER, Mike, 40627 Düsseldorf (DE); OCHMANN, Klaus, 51377 Leverkusen (DE); HARNAU, Michael, 42799 Leichlingen (DE); KOECHING, Karl-Hermann, 41540 Dormagen (DE); BURKHARDT, Nils, 42553 Velbert (DE); KALTHOF, Bernd, 42329 Wuppertal (DE); SCHNEIDER, Linn, 40597 Düsseldorf (DE); SCHMIDT, Georg, 42105 Wuppertal (DE)
(74) Vertreter: BIP Patents
(86) Internationale Anmeldenummer: PCT/EP2017/082825
(87) Internationale Veröffentlichungsnummer: WO 2018/114593

(56) Entgegenhaltungen:
- DE-A1- 19 745 373
- GB-A- 2 353 093
- JP-A- H10 197 449
- US-A1- 2014 005 078
- Anonymous: "FLUOstar Omega - The Microplate Reader for life science research", , 2. November 2016 (2016-11-02), Seiten 1-6, XP055449967, Gefunden im Internet: URL:https://www.bmglabtech.com/fileadmin/0 6_Support/Download_Documents/Brochures/mic roplate-reader-fluostar-omega-broschure.pd f [gefunden am 2018-02-09]

## Beschreibung

Die Erfindung betrifft ein Verfahren und System für Messungen im Hochdurchsatz-Screening mit hoher Zeitauflösung.

Die Identifizierung und Entwicklung neuer Arzneistoffe zielt auf die Identifizierung chemischer Verbindungen, die biochemische Prozesse, wie Ligandenbindung, makromolekulare Konformationsänderungen oder enzymatische Reaktionen, modulieren. Üblicherweise verwendet man Hochdurchsatz-Screening (high-throughput screening, HTS) zum Testen einer großen Zahl von chemischen Strukturen, da die Miniaturisierung einen schnellen, kostengünstigen und effizienten Test sicherstellt.

Fluoreszenz-basierte Tests sind aufgrund ihrer hohen Empfindlichkeit und Automatisierbarkeit wahrscheinlich die wichtigsten Ansätze für HTS. Neben dem Verfolgen der Veränderung der Fluoreszenz durch eine enzymatische Reaktion verwendet man Markierungstechniken zur Bestimmung von Protein-Protein-Wechselwirkungen oder Ligandenbindung durch Fluoreszenz-Resonanzenergietransfer (FRET) , Biolumineszenz-Resonanzenergietransfer (BRET) oder Fluoreszenz-Polarisation (FP).

Viele biologische Prozesse, vor allem die Bindung kleiner Liganden, sind durch eine sehr schnelle Kinetik gekennzeichnet, die schnelle Mischverfahren erfordert.

Die Instrumente, die Platten-Formate mit 384 oder 1536 Testvertiefungen einsetzen, sind jedoch oft hinsichtlich der zeitlichen Auflösung eingeschränkt, wodurch die Bestimmung schneller Bindungskinetiken auf Methoden mit geringem Durchsatz beschränkt ist. Sogar der Screening-Ansatz von Instrumenten, die mit einem Multidispenser ausgestattet sind (siehe González, J. E., and Maher, M. P. (2002) Cellular Fluorescent Indicators and Voltage/Ion Probe Reader (VIPR TM ): Tools for Ion Channel and Receptor Drug Discovery, Receptors and Channels 8, 283-295; Mori, T., Itami, S., Yanagi, T., Tatara, Y., Takamiya, M., and Uchida, T. (2009) Use of a Real-Time Fluorescence Monitoring System for High-Throughput Screening for Prolyl Isomerase Inhibitors, Journal of Biomolecular Screening 14, 419-424; Schroeder, K. S., and Neagle, B. D. (1996) FLIPR: A New Instrument for Accurate, High Throughput Optical Screening, Journal of Biomolecular Screening 1, 75-80; Anonymous: "FLUOStar Omega - The Microplate Reader for life science research", 1. November 2016 (2016-11-01), Seiten 1-6, XP055449967.), was die Zeitauflösung erheblich verbessert, ist hauptsächlich auf den Sekunden-Zeitbereich beschränkt.

Dies trifft auch auf die Vorrichtung aus JPH10197449 zu. Hier ist ein Gerät zur Messung von Licht aus Reaktionen, die in den Vertiefungen einer Mikrotiterplatte ablaufen, offenbart. Das Gerät hat ein Spitzen-Kolben-System, mit dem Reagenz aus einem Vorratsbehälter angesaugt wird und anschließend in die Vertiefungen einer transparenten Mikrotiterplatte abgegeben wird. Das Reagenz tritt in Wechselwirkung mit der Probe in der jeweiligen Vertiefung und von jeder Probe emittiertes Fluoreszenzlicht wird emittiert. Zur Fluoreszenzanregung werden die Proben in den Vertiefungen der Mikrotiterplatte durch den transparenten Bode der Mikrotiterplatte mit einem Beleuchtungsmittel beleuchtet. Eine Videokamera nimmt eine Bild der Mikrotiterplatte auf, und mittels einer Verarbeitungseinheit wird die Fluoreszenzintensität jeder Probe zu bestimmt.

Eine weitere Vorrichtung ist aus Patentdokument GB2353093 bekannt, das eine Vorrichtung zur Handhabung von Flüssigkeitsproben offenbart, wobei die Vorrichtung eine Vielzahl von hohlen Kapillaren umfasst, von denen jede an beiden Enden offen ist und ein definiertes Innenvolumen aufweist. Die Vorrichtung umfasst ein Gehäuse, das die Kapillaren in ihrer gewünschten Ausrichtung hält, wobei die Kapillaren in einen Innenraum des Gehäuses hineinragen und an ihren gegenüberliegenden Enden in einen Außenraum hinausragen. Die Anordnung kann für photometrische Untersuchungen verwendet werden, so dass eine Oberfläche der Flüssigkeit in jeder Kapillare mit Licht beleuchtet und das durchgelassene Licht an der anderen Oberfläche der Kapillare gemessen wird.

Aus dem Stand der Technik bekannte schnelle Mischverfahren sind Continuous- oder Stopped-Flow-Vorrichtungen.

Bei Continuous-Flow-Experimenten wird die Reaktion unter Gleichgewichtsflussbedingungen als Funktion der Strecke stromabwärts vom Mischer untersucht. Verbesserungen des Mischer-Designs führten zu Totzeiten im Bereich von 100 µs oder sogar noch kürzeren (Regenfuss, P., Clegg, R. M., Fulwyler, M. J., Barrantes, F. J., and Jovin, T. M. (1985) Mixing liquids in microseconds, Rev. Sci. Instrum. 56, 293-290; Shastry, M. C. R., Luck, S. D., and Roder, H. (1998) A Continuous-Flow Capillary Mixing Method to Monitor Reactions on the Microsecond Time Scale, Biophysical Journal 74, 2714-2721;Roder, H., Maki, K., Cheng, H., and Ramachandra Shastry, M. C. (2004) Rapid mixing methods for exploring the kinetics of protein folding, Methods 34, 15-27.). Zum Erreichen von effizientem Mischen sind jedoch hohe Flussraten und relativ große Kanalabmessungen erforderlich, was große Mengen an Material verbraucht.

Bei handelsüblichen Stopped-Flow-Instrumenten werden die Reaktanten über zwei Spritzen mithilfe eines pneumatischen Auslösers zugeführt. Nach dem Befüllen der Beobachtungszelle wird der Fluss abrupt gestoppt, wenn die Stoppspritze auf einen Anschlagblock trifft. Instrumente können routinemäßig Totzeiten von einigen wenigen Millisekunden erreichen (Dickson, P. N., and Margerum, D. W. (1986) Extension of accessible first-order rate constants and accurate dead-time determinations for stopped-flow spectroscopy, Analytical Chemistry 58, 3153-3158; Nakatani, H., and Hiromi, K. (1980) Analysis of Signal Amplitude in Stopped-Flow Method for Enzyme-Ligand Systems, Journal of Biochemistry 87, 1805-1810; Peterman, B. F. (1979) Measurement of the dead time of a fluorescence stopped-flow instrument, Analytical Biochemistry 93, 442-444).

Sowohl Continuous-Flow- als auch Stopped-Flow-Geräte sind Methoden mit niedrigem Durchsatz, der sich auf eine Küvette oder einen Kanal beschränkt. Ein schnelles Mischverfahren zum Testen mehrerer Inhibitoren und Konzentrationen ist jedoch erforderlich, da die Bestimmung schneller Bindungsreaktionen oder Enzymkinetiken eine grundlegende Rolle bei der Identifizierung und Entwicklung neuer Arzneistoffe spielt. Damit man schnelle Kinetiken in Mikrotiterplatten beobachten kann, wurde ein neues Verfahren basierend auf einem bildgebenden Instrument zur Detektion schneller Kinetiken entwickelt, das hohe Zeitauflösung mit dem Durchsatz eines stark parallelisierten Systems kombiniert. Dies ermöglicht zum ersten Mal die effiziente Anwendung von schneller Kinetik auf die Identifizierung und Entwicklung neuer Arzneistoffe.

Aus DE 10 2004 016 361 A1 und WO 03/100398 A1 sind ein optisches Analysenmessgerät für Fluoreszenzmessungen an Mikrotiterplatten bekannt. Die Mikrotiterplatten haben einen transparenten Boden. Der Anregungs- und der Auswertestrahlengang sind auf den transparenten Boden der Mikrotiterplatte gerichtet. Oberhalb der Mikrotiterplatten befindet sich eine Dispensier- oder Pipettiereinrichtung zur Flüssigkeitszugabe während ständig gleichzeitig laufender Messungen der Emission der Proben der Mikrotiterplatte.

Der Grundgedanke der Erfindung aus DE 10 2004 016 361 A1 und WO 03/100398 A1 basiert auf der Überlegung, dass für einen hohen Probendurchsatz bei einer Vielzahl von Einzelproben auf Mikrotiterplatten die Anregung der Einzelproben sowie die Aufnahme der Emission und gegebenenfalls die Zugabe von Flüssigkeiten gleichzeitig erfolgen sollten und möglichst mittels eines Bildaufnehmers (z. B. intensivierte Kamera) die Emission (Fluoreszenz oder Lumineszenz) aller Proben der Mikroplatte über längere Zeit permanent detektiert werden kann.

US 2014/0005078 A1 offenbart eine Vorrichtung bei der das Licht jeder Vertiefung einer Mikrotiterplatte über Lichtleiter ausgelesen und anschließend spektral zerlegt wird. Ein Detektor detektiert einen bestimmten Wellenlängenbereich aus dem Spektrum.

Für Tests der Zellbiologie, bei denen häufig die Kinetik einer Fluoreszenzreaktion nach Zugabe einer pharmakologisch wirksamen Substanz gemessen werden muss, erfüllt das Analysenmessgerät durch die zeitgleiche Messung aller Wells die Forderung, dass vor, während und nach Substanzzugabe die Emission der Proben gemessen werden soll. Wenn Fluoreszenzanregung und Detektion der Emission der Mikrotiterplatte von unten erfolgen, können von oben Substanzen und/oder andere Flüssigkeiten beliebig, auch zeitgleich in mehreren Wells oder unterschiedliche Substanzen und/oder andere Flüssigkeiten zu definierten Zeiten und in unterschiedlichen Mengen oder Konzentrationen, berührungslos zugegeben und fortlaufend beobachtet werden. Insbesondere für das HTS-Regime kann durch diese parallele Messung mittels einer CCD-Kamera der sogenannten Multiplexvorteil gewonnen werden und somit ein hoher Probendurchsatz trotz deutlich erhöhter Messzeit pro Well erzielt werden.

Mit dem optischen Analysenmessgerät aus DE 10 2004 016 361 A1 und WO 03/100398 A1 kann zwar ein hoher Probendurchsatz erzielt werden, es ist jedoch nicht für Intensitätsmessungen mit einer Zeitauflösung von unter 1 sec ausgelegt wie sie für die Aufklärung von schnellen Kinetiken bei bestimmten biologische Prozesse, wie der Bindung kleiner Liganden erforderlich sind.

Die Lösung des angegebenen Problems besteht in dem Verfahren zur schnellen, kinetischen Messungen im Hochdurchsatz-Screening mit hoher Zeitauflösung gemäß Anspruch 1.

Gegenstand der Erfindung ist außerdem ein System zur schnellen kinetischen Messungen im Hochdurchsatz-Screening mit hoher Zeitauflösung gemäß Anspruch 8.

Die Mikrotiterplatte hat bevorzugt 384 oder 1536 Testvertiefungen.

### Dosiervorrichtung

Die Dosiervorrichtung weist ein Gehäuse mit mindestens einer Druckkammer, einer Zuführöffnung für die Zuführung von Flüssigkeit in die Druckkammer und einer Vielzahl von Durchlässen zwischen der Druckkammer und einer Außenseite des Gehäuses auf, wobei sich in jedem der Durchlässe ein Röhrchen befindet, das mit seinem ersten Ende in die Druckkammer hinein ragt und mit seinem zweiten Ende an der Außenseite aus dem Gehäuse herausragt.

Die Druckkammer hat bevorzugt in eine Raumdimension eine größere Ausdehnung als in die beiden anderen Raumdimensionen. In Richtung der größeren Ausdehnung verläuft die Längsachse der Druckkammer. Die Längsachse der Druckkammer verläuft gleichzeitig parallel zur Außenseite des Gehäuses. In einer bevorzugten Ausführungsform ist die Druckkammer zylindrisch oder quaderförmig. Die Durchlässe befinden sich in einer der Wände der Druckkammer, die parallel zur Längsachse der Druckkammer verlaufen. Bevorzugt sind die Durchlässe parallel zueinander angeordnet. Es sind mindestens zwei Durchlässe vorhanden. Die Durchlässe können in einer oder mehrerer Reihen parallel zur Längsachse der Druckkammer angeordnet sein. Dabei sind bevorzugt 12, besonders bevorzugt 24 oder 48 Durchlässe pro Reihe vorhanden. Idealerweise ist die Zahl der Durchlässe pro Reihe an die Zahl der Vertiefungen in einer Reihe der Mikrotiterplatte (lange Seite), in die durch die Dosiervorrichtung dosiert wird, angepasst.

Bei den Röhrchen handelt es sich bevorzugt um Kapillaren aus Metall oder Kunststoff, Kapillaren, d.h. dünne Röhren, in denen bei den verwendeten Flüssigkeiten der Effekt der Kapillarität auftritt. Sie sollten einen inneren Durchmesser im Bereich von 0,1 mm bis 0,8 mm, bevorzugt 0,2 mm bis 0,6 mm haben. Der Außendurchmesser kann im Bereich von 0,35 mm bis 2 mm, bevorzugt 0,6 mm bis 1,1 mm liegen. Die Länge der Röhrchen liegt im Bereich von 6 mm bis 15 mm, bevorzugt 8,5 mm bis 13 mm, besonders bevorzugt 10 mm bis 13 mm.

Die Röhrchen sind senkrecht (90°) oder schräg in einem Winkel im Bereich von 40° bis < 90° zur Außenseite des Gehäuses angeordnet, je nachdem, ob senkrecht von oben Flüssigkeit in die Vertiefung der Mikrotiterplatte abgegeben werden soll, oder unter einem Winkel auf die Seitenwand der Vertiefung abgegeben bzw. eingespritzt werden soll.

Zur Vergrößerung der Hydrophobizität der Röhrchen, die sich auf der Außenseite des Gehäuses befinden, können diese ummantelt, bevorzugt mit Kunststoff, zum Beispiel Teflon, sein.

Die kapillaren Röhrchen ragen mit einem Ende in die Druckkammer hinein und mit dem anderen Ende aus dem Gehäuse heraus

In einer Ausführungsform befindet sich die Zuführöffnung für die Flüssigkeit in einer der Wände, die senkrecht zur Längsachse der Dosierkammer angeordnet sind. Das Gehäuse kann weiterhin eine Belüftungsöffnung aufweisen, aus der beim Befüllen der Dosierkammer mit Flüssigkeit die Luft herausgedrängt wird. Diese Belüftungsöffnung kann sich in einer der Wände, die senkrecht zur Längsachse der Dosierkammer angeordnet sind, befinden.

Die Druckkammer kann eine Querschnittsfläche im Bereich von 60 mm² bis 300 mm² oder einen Durchmesser im Bereich von 4 mm bis 10 mm bevorzugt im Bereich von 5,5 mm bis 6,5 mm haben.

Das Gehäuse der Dosiervorrichtung kann auch mehr als eine, zum Beispiel zwei, drei oder vier Druckkammern aufweisen, deren Längsachsen parallel zueinander verlaufen. Zu jeder Druckkammer gehört eine separate Zuführöffnung für die Zuführung von Flüssigkeit in die Druckkammer und jede Druckkammer hat einer Vielzahl von Durchlässen zwischen der Druckkammer und der Außenseite des Gehäuses mit den entsprechenden Durchlässen und Röhrchen. Bevorzugt sind die Durchlässe und Röhrchen der verschiedenen Druckkammern parallel zueinander angeordnet. Je nach Bedarf können auch mehrere Gehäuse mit einer oder mehreren Druckkammern nebeneinander und parallel zueinander angeordnet werden.

Wegen des großen Volumens der Druckkammer kombiniert mit den kurzen Röhrchen, die in die Druckkammer hineinragen, entsteht kein Druckgradient und somit ist eine sehr schnelle und mengenmäßig genaue Abgabe der Flüssigkeit möglich. Eine parallele, präzise und schnelle Dosierung im µl-Bereich in z.B. 384er- oder 1536er-Mikrotiterplatten wird ermöglicht.

Das Dosiersystem weist zusätzlich zur Dosiervorrichtung ein Flüssigkeitsreservoir auf, das über eine Leitung mit der Zuführöffnung der Dosiervorrichtung verbunden ist. Druck auf das Flüssigkeitsreservoir bewirkt, dass Flüssigkeit vom Flüssigkeitsreservoir in die Druckkammer gepumpt wird. Hierfür ist das Flüssigkeitsreservoir druckdicht von der umgebenden Atmosphäre abgeschlossen und mit einer Pumpe verbunden, die den notwendigen Druck aufbaut. Bei mehreren Druckkammern kann die Zuführöffnung jeder Druckkammer mit demselben oder verschiedenen Reservoirs von Flüssigkeit verbunden sein.

Über die Schaltzeit des Ventils zwischen Flüssigkeitsreservoir und Zuführöffnung in Kombination mit dem Druck der Pumpe kann die Menge der Flüssigkeit, die in jedem Schaltzyklus (Durchlass auf/zu) in die Druckkammer gelangt und über die einzelnen Röhrchen ausgegeben wird, gesteuert werden.

In einer Ausführungsform der Erfindung liegt die Flüssigkeit aus dem Flüssigkeitsreservoir unter einem Druck im Bereich von 50 kPa (0,5 bar) bis 200 kPa (2 bar) bevorzugt im Bereich von 50 kPa (0,5 bar) bis 85 kPa (0,85) bar am Ventil an und das Ventil hat eine Schaltzeit im Bereich von 5 ms bis 200 ms (5-60 ms bei Mikrotiterplatten mit 1536 Vertiefungen, 40-200 ms bei Mikrotiterplatten mit 384 Vertiefungen), bevorzugt im Bereich von 5 ms bis 50 ms.

Die Schaltzeit des Ventils und der Druck durch die Pumpe sind so eingestellt, dass das Abgabevolumen der Dosiervorrichtung im Bereich 0,3 und 300 µl pro Kapillare liegt, bevorzugt zwischen 1 und 30 µl.

### Beleuchtung

Das Beleuchtungssystem umfasst mindestens ein Paar LED-Lichtmodule, die an einander gegenüberliegenden Seiten unterhalb der Mikrotiterplatte angeordnet sind und den transparenten Boden der Mikrotiterplatte unter einem Winkel von 20 bis 80 Grad beleuchten.

Ein erfindungsgemäßes LED-Lichtmodul zeichnet sich dadurch aus, dass die maximale Emission nach Beginn eines Triggersignals in weniger als 10 µsec erreicht wird und der Puls innerhalb von ≤ 20 µsec nach dem Ende des Triggersignals wieder abgeklungen ist. Damit sind schnelle kinetische Messungen möglich. Gleichzeitig wird durch die optische Anordnung eine homogene Ausleuchtung der Mikrotiterplatte ermöglicht.

Das LED-Lichtmodul enthält in einer oder mehreren Reihen angeordnete LED-Lichtquellen und optional eine stabförmige, plankonvexe Zylinderlinse, die mit der flachen Seite so an den LED-Lichtquellen angeordnet ist, dass die Strahlung der LED-Lichtquellen auf der planen Seite in die Zylinderlinse eintritt und an der konvexen Seite aus der Zylinderlinse austritt.

Die Anzahl der LED-Lichtquellen kann im Bereich von 12 bis 36 liegen.

Bevorzugt sind die LED-Lichtquellen auf einer LED-Platine angeordnet und die LED-Platine ist mit einem Kühlkörper wärmeleitend verbunden.

Zwischen den LED-Lichtquellen und der Zylinderlinse kann sich ein Extinktionsfilter befinden und zwischen Extinktionsfilter und Zylinderlinse ein Schutzglas oder ein Polarisationsfilter.

In einer bevorzugten Ausführungsform handelt es sich bei den LED-Lichtquellen um Hochleistungs-LED-Lichtquellen im sichtbaren (VIS) oder UV-Wellenlängenbereich, bevorzugt im Wellenlängenbereich von 340 nm bis 800 nm.

Für bestimmte Anwendungen kann auch mehr als ein Paar von LED-Lichtmodulen verwendet werden oder es können mehrere LED-Lichtmodule verwendet werden. Wenn die verschiedenen LED-Lichtmodule verschiedene Wellenlängen aufweisen, kann eine Fluoreszenzanregung in mehreren Wellenlängen gleichzeitig erfolgen.

Zwei Paare vonLED-Lichtmodulen können jeweils an einander gegenüberliegenden Seiten unterhalb der Mikrotiterplatte angeordnet sein und den transparenten Boden der Mikrotiterplatte unter gleichem oder verschiedenem Winkel beleuchten. Zwei oder mehr Paare von LED-Lichtmodulen können jeweils mit unterschiedlichem Abstand von der Mikrotiterplatte an denselben Seiten der Mikrotiterplatte angeordnet sein und jeweils mit unterschiedlichem Beleuchtungswinkel den transparenten Boden der Mikrotiterplatte beleuchten.

Bevorzugt werden die beiden LED-Lichtmodule eines einzigen Paares an einander gegenüberliegenden Seiten unterhalb der Mikrotiterplatte angeordnet und zusätzlich ein oder zwei weitere LED-Lichtmodule mehr mittig unterhalb der Mikrotiterplatte angeordnet, so dass das emittierte Licht von diesen zusätzlichen LED-Lichtmodulen unter einem größeren Winkel zur Ebene der Mikrotiterplatte auf den transparenten Boden der Mikrotiterplatte trifft als das Licht der LED-Lichtmodule des Paares.

Eine Anwendung für LED-Lichtmodule mit unterschiedlichen Wellenlängen ist das Feld der Optogenetik. Optogenetik bedeutet, dass genetisch modifizierte Zellen mithilfe von lichtempfindlichen Proteinen durch Licht kontrolliert werden. Eine Wellenlänge wird dazu verwendet diese Proteine zu aktivieren und darüber zelluläre Prozesse zu beeinflussen. Um diese Prozesse auch beobachten zu können wird eine weitere Wellenlänge zur Anregung der Fluoreszenzemission für die Fluoreszenzmessung eines entsprechenden Sensors oder Farbstoffs verwendet.

### Detektion

Die Detektion des emittierten Lichts erfolgt unter einem rechten Winkel zum Boden der Mikrotiterplatte.

Das Detektionssystem kann mittig unter der Mikrotiterplatte platziert sein und das emittierte Licht direkt empfangen, und/oder das emittierte Licht wird über entsprechende Umlenkspiegel, bzw. dichroitische Strahlteiler, auf das Detektionssystem gelenkt.

Die Detektion des emittierten Lichts kann bei verschiedenen Wellenlängen gleichzeitig erfolgen.

Das Detektionssystem ist geeignet zur Detektion der elektromagnetischen Strahlung aus mehreren oder allen Testvertiefungen gleichzeitig mit einem zeitlichen Abstand von 1 - 1000 ms zwischen den einzelnen Messpunkten.

### Figuren und Beispiele

- Fig. 1: Zwei Dosiervorrichtungen mit zwei Dosierkammern in perspektivischer Ansicht
- Fig. 2: Dosiervorrichtung mit zwei Dosierkammern in perspektivischer Ansicht mit innerer Struktur
- Fig. 3: Dosiervorrichtung in Seitenansicht
- Fig. 4: Vergrößerter Ausschnitt der Dosiervorrichtung in Seitenansicht (ventilseitig)
- Fig. 5: Dosiersystem mit Flüssigkeitsreservoir
- Fig. 6: LED Lichtmodul in perspektivischer Ansicht
- Fig. 7: LED Lichtmodul als Explosionszeichnung
- Fig. 8: LED Lichtmodul im Querschnitt
- Fig. 9: LED Lichtmodul im Längsschnitt
- Fig. 10: LED-Emission bei unterschiedlich langen Triggersignalen
- Fig. 11: Bildgebendes Messinstrument (einkanalige Detektion)
- Fig. 12: Bildgebendes Messinstrument (zweikanalige Detektion)
- Fig. 13: Emissionsprofil einer Mikrotiterplatte mit 1536 Testvertiefungen
- Fig. 14 A-C: Messung der Kinetik der ANS-Bindung an BSA mit dem bildgebenden Messinstrument

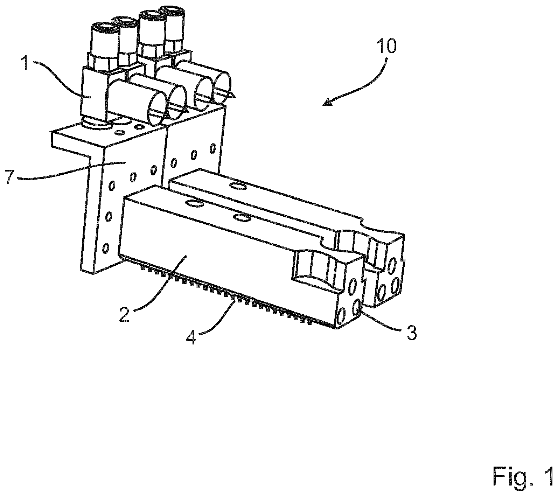

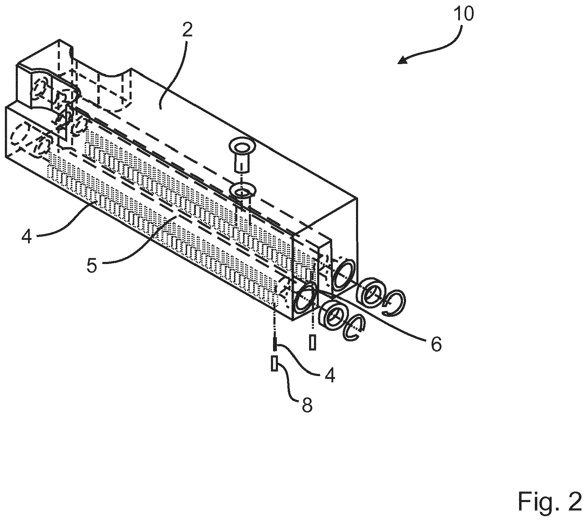

Fig. 1 zeigt zwei parallel angeordnete erfindungsgemäße Dosiervorrichtungen 10 mit jeweils zwei Druckkammern in perspektivischer Ansicht. Weitere Ansichten einer Dosiervorrichtung sind in den Fig. 2 bis 4 gezeigt. Jede Dosiervorrichtung 10 hat ein quaderförmiges Gehäuse 2 mit zwei röhrenförmigen Bohrungen von 4-10 mm Durchmesser und 120-140mm Länge. Diese Bohrungen bilden zwei parallele Druckkammern 5. Jede Bohrung hat ein offenes Ende, das die kreisförmige Zuführöffnung 6 bildet. Das gegenüberliegende Ende ist zur Systembefüllung und -entleerung geöffnet und im Dosierbetrieb dicht verschlossen. Hier befindet sich die Auslauf- bzw. Entlüftungsöffnung 3. Die Gehäuse 2 sind mit der Seite, an der sich die Zuführöffnung 6 befindet, an einer Halterung 7 so befestigt, dass sie waagerecht von der Halterung 7 wegragen. Die Halterung 7 hat eine Aussparung für jede Zuführöffnung 6. Auf der Unterseite des wegragenden Gehäuses 2 befindet sich eine Reihe von bis zu 48 Durchlässen zwischen jeder Druckkammer 5 und der Unterseite des Gehäuses 2, wobei sich in jedem der Durchlässe ein kapillares Röhrchen 4 aus vorzugsweise Edelstahl befindet, das mit seinem ersten Ende in die Druckkammer 5 hinein ragt und mit seinem zweiten Ende an der Unterseite aus dem Gehäuse 2 herausragt. Die kapillaren Röhrchen haben einen inneren Durchmesser von 0,1 - 0,8 mm und sind senkrecht angeordnet. Die Abschnitte der Röhrchen, die aus der Unterseite des Gehäuses 2 hinausragen, sind hydrophob (vorzugsweise mit Teflon) ummantelt.

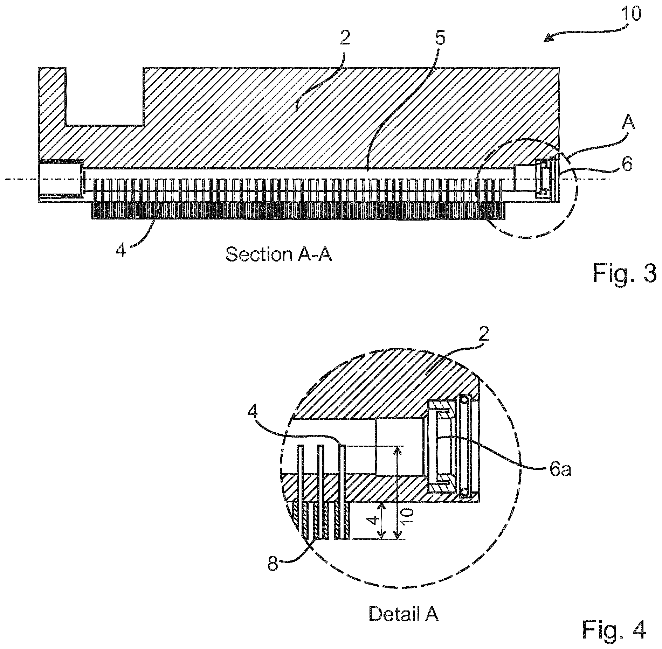

Fig. 3 zeigt die Dosiervorrichtung 10 in Seitenansicht. Der kreisförmige Ausschnitt A ist in Fig. 4 vergrößert gezeigt. In Fig. 4 ist zu erkennen, dass die kapillaren Röhrchen 4 bis zur halben Höhe der Druckkammer in diese hineinragen. Dies hat sich als besonders vorteilhaft für eine gleichmäßige Dosierung erwiesen.

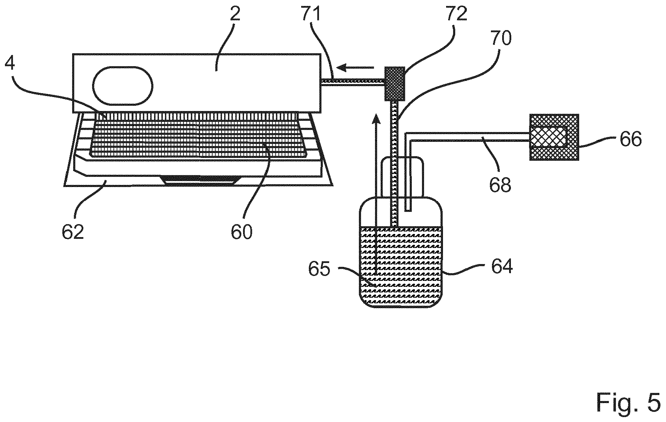

Fig. 5 zeigt das erfindungsgemäße Dosiersystem. Die Druckkammer 5 (nicht sichtbar im Gehäuse 2) der Dosiervorrichtung 10 ist über eine Leitung 71, ein Ventil 72 und eine weitere Leitung 70 mit einer in einem Vorratsgefäß befindlichen Flüssigkeit verbunden. Über eine Membranpumpe 66 und eine Druckleitung 68 wird Raumluft unter einem Druck von 80 kPa (0,8 bar) in das Vorratsgefäß eingeleitet. Statt Raumluft kann auch ein anderes Gas wie N₂ verwendet werden. Statt Membranpumpe kann auch ein anderes Druckversorgungssystem benutzt werden. Als geeignete Ventile haben sich Magnetventile mit geringem Totraumvolumen und kurzer Schaltzeit erwiesen wie sie zum Beispiel von der Fa. Parker Hannifin Corp., Cleveland, OH 44124 USA vertrieben werden.

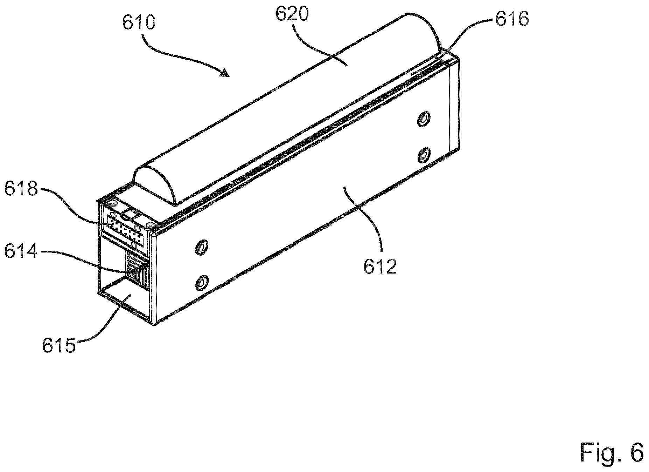

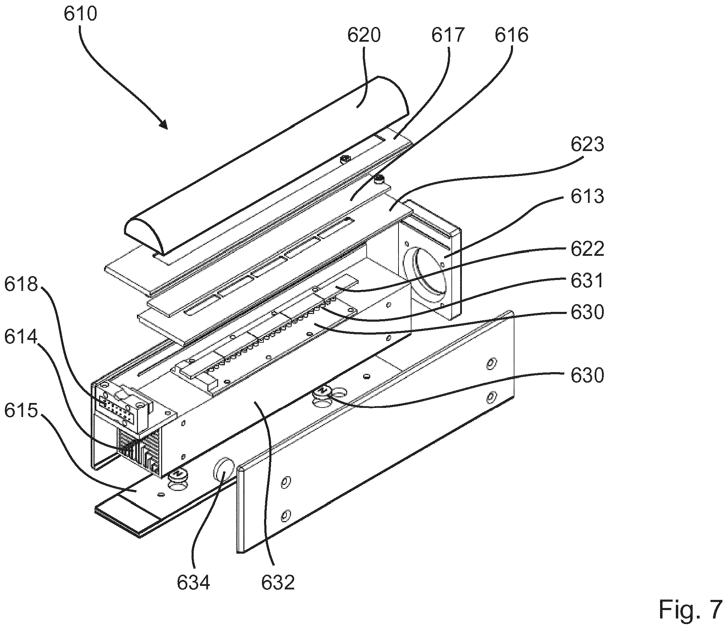

Die Fig. 6 - 9 zeigen verschiedene Ansichten eines LED-Lichtmoduls 610. Fig. 6 zeigt das LED-Lichtmodul 610 in perspektivischer Ansicht. Das LED-Lichtmodul 610 hat ein Gehäuse 612 mit einem Boden 615 und zwei Seitenwänden und einer vorderen Gehäuseabdeckung 613 mit Kühllufteinstromöffnung. Die dem Boden 615 gegenüberliegende offen Seite des Gehäuses 612 wird durch eine Schutzglashalterung 617 und ein Schutzglas 616 abgeschlossen. Das Schutzglas 616 kann im Falle von Polarisationsmessungen durch einen Polarisationsfilter ersetzt werden. Oberhalb des Schutzglases 616 und der Schutzglashalterung 617 kann eine stabförmige, plankonvexe Zylinderlinse mit der planen Seite Richtung Schutzglas 616 bzw. Schutzglashalterung 617 angebracht werden. Gegenüber der vorderen Gehäuseabdeckung 613 befindet sich in der offenen, verlängerten Seite des Gehäuses die Ventilatorposition für die Kühlluftansaugung. Oberhalb der Ventilatorposition 614 befinden sich elektrische Anschlüsse 618.

Im Inneren des Gehäuses 612 befindet sich ein Kühlkörper 632 auf dem einerseits die elektrischen Anschlüsse 618 und andererseits die LED Platine 630 angebracht sind. Die LED Platine 630 kann aus einer oder zwei parallelen Reihen mit 12 bis 36 LEDs 631, vorzugsweise einer Reihe mit 24 LEDS 631, bestehen. Die LEDs 631 sind so angeordnet, dass sie im Betrieb im Bild nach oben abstrahlen würden. Oberhalb der LEDs 631 befindet sich der Anregungsfilter 622 in der Filterhalterung 623. Das Gehäuse wird durch Schutzglas 616 und der Schutzglashalterung 617 abgeschlossen. Am Gehäuseboden 615 befindet sich ein Haltemagnet 636 sowie ein RFID-Transponder 634. Dieser könnte auch in einer Seitenwand montiert sein.

Für die nachfolgend beschriebenen Messungen wurde ein LED Lichtmodul 610 mit den LEDs 631 vom Typ LuxeonRebel der Fa. Philips verwendet. Andere für denselben Einsatz geeignete LEDs 631 sind zum Beispiel:
- Osram: Golden DRAGON Plus, OSLON SSL 80/150, Platinum Dragon
- CREE: XLampXPC, XLampXRC, Xlamp7090XRE, XLampXPE,
- Nichia: NCU133A, NCSU034B, NCSU033B

Die Emissionsleistung dieser LEDs liegt wellenlängenabhängig bei 100-2000 mW.

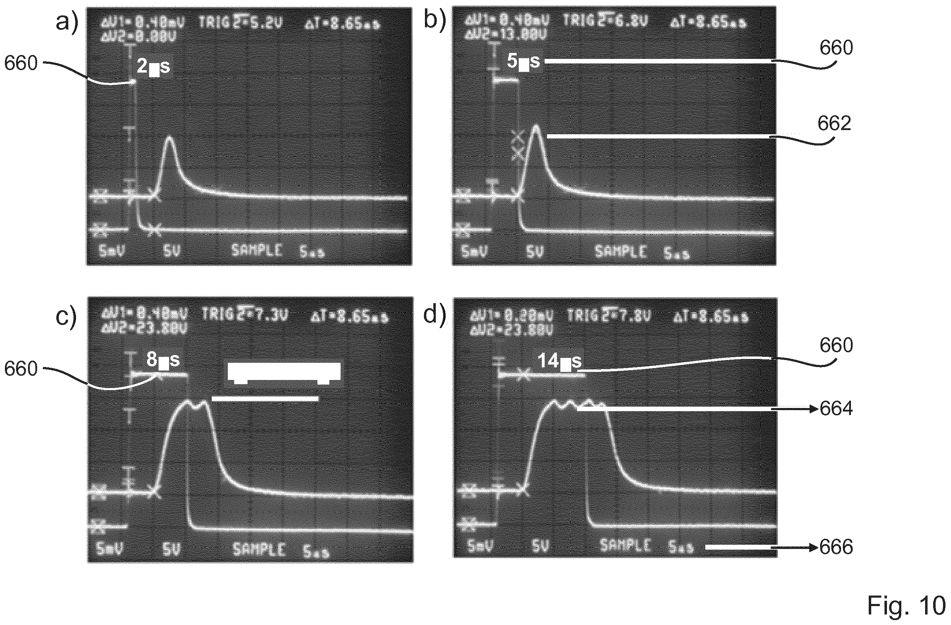

Fig. 10 a) bis d) zeigen Messungen des zeitlichen Verlaufs der LED-Emission bei unterschiedlich langen Triggersignalen 660. Es wird jeweils ein unterschiedlich langes Triggersignal 660 über die Anschlüsse 618 an die LEDs 631 der Platine 630 gegeben. Je nach Länge des Triggersignals 660 wird eine unterschiedlich intensive LED-Emission von unterschiedlicher Länge erreicht. Die x-Achse 666 zeigt die Zeit in Einheiten von 5 µsec.

In Fig. 10 a) ist die LED-Emission bei einem Triggersignal 660 von 2 µsec Länge gezeigt. Die LED Emission beginnt erst nach einer Totzeit von 5 µsec nach Beginn des Triggersignals 660 und erreicht 60% der maximalen Emissionsleistung.

In Fig. 10 b) ist die LED-Emission bei einem Triggersignal 660 von 5 µsec Länge gezeigt. Die LED Emission 662 beginnt erst nach einer Totzeit von 5 µsec nach Beginn des Triggersignals 660 und erreicht 70% der maximalen Emissionsleistung.

In Fig. 10 c) ist die LED-Emission bei einem Triggersignal 660 von 8 µsec Länge gezeigt. Die LED Emission beginnt erst nach einer Totzeit von 5 µsec nach Beginn des Triggersignals 660 und erreicht 100% der maximalen Emissionsleistung.

In Fig. 10 d) ist die LED-Emission 64 bei einem Triggersignal 660 von 14 µsec Länge gezeigt. Die LED Emission beginnt erst nach einer Totzeit von 5 µsec nach Beginn des Triggersignals 660 und erreicht 100% der maximalen Emissionsleistung.

Die Zeitverzögerung zwischen Beginn des Triggersignals 660 und der maximalen Emissionsleistung der LEDs 631 des Moduls liegt bei etwa 8 µsec. 17 µsec nach dem Ende des Triggersignals 660 ist die LED-Emission vollständig abgeklungen. Die LED Intensität kann über eine Puls-Weiten-Modulation oder Stromregelung gesteuert werden.

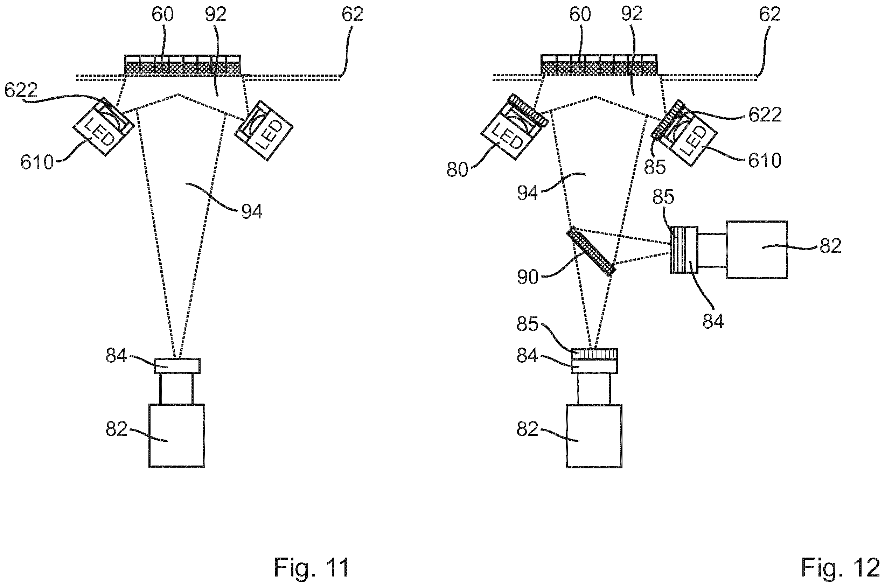

Im Folgenden wird anhand der Fig. 11 und 12 der Betrieb eines Systems zur schnellen kinetischen Messungen im Hochdurchsatz-Screening mit hoher Zeitauflösung beschrieben.

Die Dispensierung der Flüssigkeit mit den Reaktanten erfolgt von der Oberseite der auf einem Mikrotiterplatten-Positionierungstablett 62 befindlichen Mikrotiterplatte 60 mit transparentem Boden. Die Dispensierung wird mit Beleuchtung von schräg unten und dem Nachweis mit entsprechenden Kameras von unten kombiniert. Der Fortschritt einer Reaktion wird verfolgt, indem das Fluoreszenzprofil von einer Reihe mit 48 Testvertiefungen der Mikrotiterplatte 60 gleichzeitig aufgezeichnet wird. Das Dispensierungs- und Beleuchtungssystem sind dabei so ausgelegt und gesteuert, dass mit dieser Anordnung die Beobachtung des kinetischen Prozesses einschließlich der Dosier- und Mischzeit möglich ist.

Die Dosierung erfolgt mit Hilfe eines Dosiersystems. Die Dosiervorrichtung 10 ist Teil dieses Dosiersystems. Die Flüssigkeit 65 in einem Vorratsgefäß 64, die den zu untersuchenden Reaktanten enthält, wird über ein Ventil 72 in die Dosierkammer 5 (nicht gezeigt) der Dosiervorrichtung gepumpt (Fig. 5). Die kapillaren Röhrchen 4 haben eine Öffnung (= Innendurchmesser) von ~ 800 µm, wodurch eine parallele Dosierung in 48 Testvertiefungen der Mikrotiterplatte ermöglicht wird (Fig. 5). Zum Erreichen von Mischungsbedingungen hoher Turbulenz wird die Ausrichtung der Dosierungsauslässe der Röhrchen 4 speziell an Mikrotiterplatten mit 384 und 1536 Testvertiefungen angepasst. Beste Mischergebnisse für Mikrotiterplatten mit 384 Testvertiefungen wurden durch Dispensieren des Reaktanten diagonal auf die Mikrotiterplattenwände erreicht. Im Gegensatz dazu wird das geringere Dosierungsvolumen, das für Mikrotiterplatten 60 mit 1536 Testvertiefungen erforderlich ist, senkrecht dosiert, wie in Fig. 5 gezeigt. Die Schaltzeit des Ventiles, und damit das zu dosierende Volumen, wird über eine für jeden zu verwendenden Druck hinterlegte Kalibrierungsfunktion (linear oder polynomisch 3.Ordung) definiert. Eine präzise Mikrotiterplatten-Halterung 62 stellte die optimale und reproduzierbare Ausrichtung der Dosiervorrichtung 10 zu den Vertiefungen der Mikrotiterplatte 60 sicher.

Die homogene Bodenbeleuchtung der Mikrotiterplatte 60 wird durch ein Paar LED -Lichtmodule 610 mit 12bis 36 (UV bzw. VIS-) Hochleistungs-LEDLichtquellen 631 erreicht, die in Reihen angeordnet und diagonal zu der Platte ausgerichtet sind (Fig. 11, 12 und 7). Die eingesetzten LEDs 631 führen Anregungslicht 92 im Wellenlängenbereich von 340 bis 800 nm zu und Extinktionsfilter verbessern die Wellenlängensselektivität, indem sie einen ausgewählten Wellenlängenbereich übertragen. Das emittierte Fluoreszenzlicht 94 wird in einem Winkel von 90° durch eine schnelle und hoch-empfindliche rückwärtig beleuchtete EMCCD (back-illuminated-electron multyplying charge coupled device)- oder ICCD (intensified charge coupled device) Kamera 82 nachgewiesen. Die Kamera 82 ist mit Interferenzfiltern 84 ausgestattet und kann zusätzlich mit Polarisationsfiltern 85 ausgestattet werden.

Die Fluoreszenzdetektion mit 2 Kameras 82 und einem Strahlteilerspiegel 90 ermöglicht die zeitgleiche Detektion zweier Emissionssignale wie sie z.B. bei Messungen zum Förster-Resonanzenergietransfer (FRET), Biolumineszenz-Resonanzenergietransfer (BRET) oder zu Fluoreszenz-Polarisation (FP) notwendig sind.

Eine Erweiterung des in Fig. 11 und 12 gezeigten Meßsystems durch weitere LED-Beleuchtungseinheiten, die unterhalb der gezeigten LED-Einheiten mit geändertem Beleuchtungswinkel angeordnet sind, ist möglich. Wenn diese zusätzlichen LED-Einheiten eine andere Wellenlänge als die ursprünglichen LED-Einheiten aufweisen, kann eine Fluoreszenzanregung in mehreren Wellenlängen gleichzeitig erfolgen.

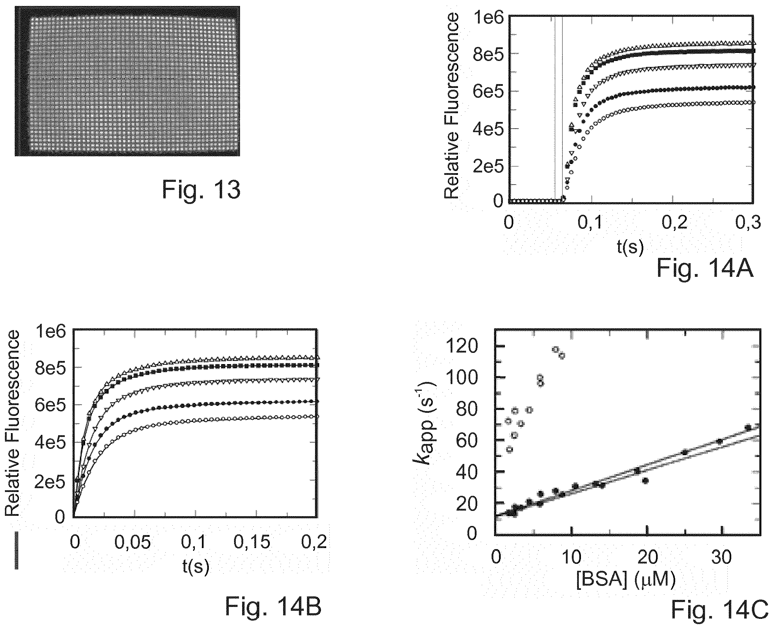

Die Falschfarbendarstellung der Emission einer Mikrotiterplatte mit 1536 Testvertiefungen, die fluoreszierende Lösung enthalten, ist beispielhaft in Fig. 13 dargestellt. Daten für die Testvertiefungen werden gesammelt, indem bis zu 1000 Punkte pro Sekunde und Testvertiefung erfasst und visualisiert und durch eine maßgeschneiderte Datenverarbeitungssoftware verarbeitet werden.

### Leistungstest

Ein Verfahren, das routinemäßig zur Untersuchung der Leistung einer schnellen Mischvorrichtung verwendet wird, ist die Beobachtung einer schnellen Testreaktion. Für Fluoreszenzstudien wird geeigneterweise die Bindung des hydrophoben Farbstoffs 1-Anilino-8-naphthalinsulfonsäure (ANS) an Rinderserumalbumin (BSA) verfolgt, die mit einer großen Zunahme der Fluoreszenzausbeute einhergeht. Die Fluoreszenzkinetiken für verschiedene BSA-Konzentrationen werden an Exponentialfunktionen angepasst und auf eine gemeinsame Anfangsfluoreszenz extrapoliert. Dieser gemeinsame Punkt liefert die Fluoreszenz von ANS in Abwesenheit von BSA zum Ausgangszeitpunkt (t₀) der Reaktion. Der Zeitabstand von diesem Punkt bis zum ersten Datenpunkt, der auf die angepasste Exponentialkurve fällt, liefert eine Abschätzung der Totzeit der Messung. Fig. 14 A-C zeigt die korrigierten Fluoreszenzkinetiken bei verschiedenen BSA-Konzentrationen, die in dem bildgebenden Messinstrument mit der erfindungsgemäßen Dosiervorrichtung für schnelle Kinetik gemessen wurden.

Nach 55 ms wurden 1,6 µl ANS-Lösung durch eine Kapillarventilschaltung von 9 ms zu einer Mikrotiterplatte mit 1536 Testvertiefungen, die BSA enthielt, hinzugefügt (Fig 14A). Die Kapillarventilschaltung ist über den grauen Balken angedeutet. Die Bindung von ANS an BSA führt zu einer Erhöhung der ANS-Fluoreszenz, die bei 460 nm (Bandpass 60 nm) nach Anregung bei 365 nm (Bandpass 36 nm) aufgezeichnet wird. Die ANS- und BSA-Lösungen wurden in 100 mM Kaliumphosphat (pH 7,5) hergestellt. Endkonzentration: 5 µM ANS und 1,9 (offene Kreise), 2,5 (ausgefüllte Kreise), 3,4 (umgekehrte Dreiecke), 7,9 (Quadrate) und 10,6 µM (Dreiecke) BSA (Fig. 14A).

Der Ausgangszeitpunkt der Bindungsreaktion wurde ermittelt durch doppelt exponentielle Anpassungen und Extrapolation der Fluoreszenzkinetiken auf die gemeinsame Anfangszeit t₀. Die (aus Fig. 14 A entnommenen) Fluoreszenzkinetiken wurden auf diese Anfangszeit t₀ korrigiert (Fig. 14 B). Durchgezogene Linien zeigen Doppelexponentialfunktionen, die auf den gemeinsamen Zeitpunkt to extrapoliert wurden.

Es sollte beachtet werden, dass t₀ der Reaktion nicht äquivalent mit dem Zeitpunkt der Ventilschaltung ist, sondern um den Eintritt und die Mischung der Reaktanten in den Testvertiefungen zeitverzögert ist. Die Totzeit des Instruments, die durch den Zeitraum von to bis zum ersten richtig bestimmten Punkt auf der angepassten Exponentialkurve implementiert wird, basiert auf der Dispensierzeit und Mischartefakten. Beim Vorliegen von 3µl Flüssigkeit in den Testvertiefungen einer Mikrotiterplatte und Dispensierung eines kleinen Volumens von 1,6 µl in die 1536 Testvertiefungen dieser Mikrotiterplatten, kann eine Totzeit von etwa 10 ms erreicht werden, die annähernd der Zeitauflösung von kommerziellen Stopped Flow-Instrumenten von einigen wenigen Millisekunden entspricht.

Die nachgewiesenen Fluoreszenzspuren (Fig.14B) zeigen einen sehr niedrigen Rauschpegel, was auf die hohe Qualität der Kinetikdaten hindeutet. Fig.14C zeigt ein Diagramm der aus den Kinetikspuren ermittelten apparenten Ratenkonstanten der Bindung als Funktion der BSA-Konzentration. Es konnte eine langsame (ausgefüllte Kreise) und eine schnelle Bindungsphase (offene Kreise) nachgewiesen werden. Die lineare Abhängigkeit der Bindungsphase mit langsamer Kinetik von der BSA-Konzentration bestätigt die Genauigkeit und Zuverlässigkeit der bestimmten Spuren. Die beobachteten Ratenkonstanten (schwarz) wurden mit Daten verglichen, die durch eine konventionelle Stopped-Flow-Apparatur erhalten wurden (rot). Die apparenten Ratenkonstanten sowie die Ratenkonstanten zweiter Ordnung, die anhand der Konzentrationsabhängigkeit der langsamen Bindungsphase bestimmt wurden, stimmen ausgezeichnet mit den Daten überein, die durch Zugabe in einer Stopped-Flow-Apparatur in einer einzelnen Küvette erhalten wurden.

### Referenznummern:

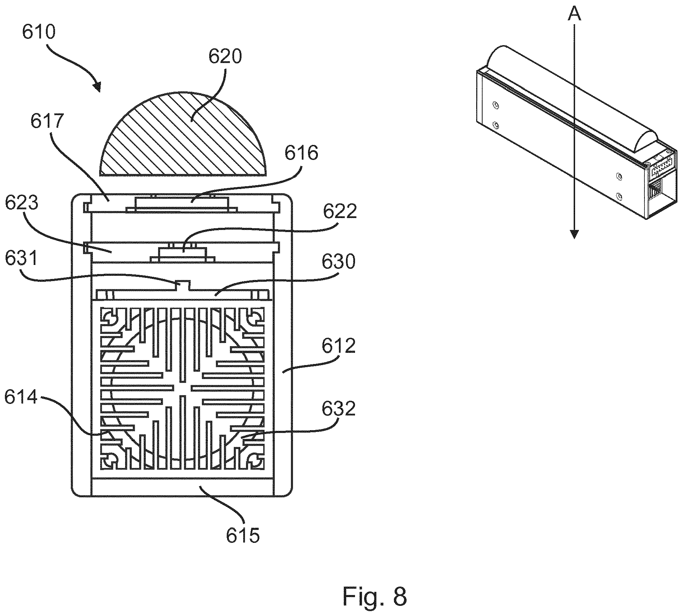

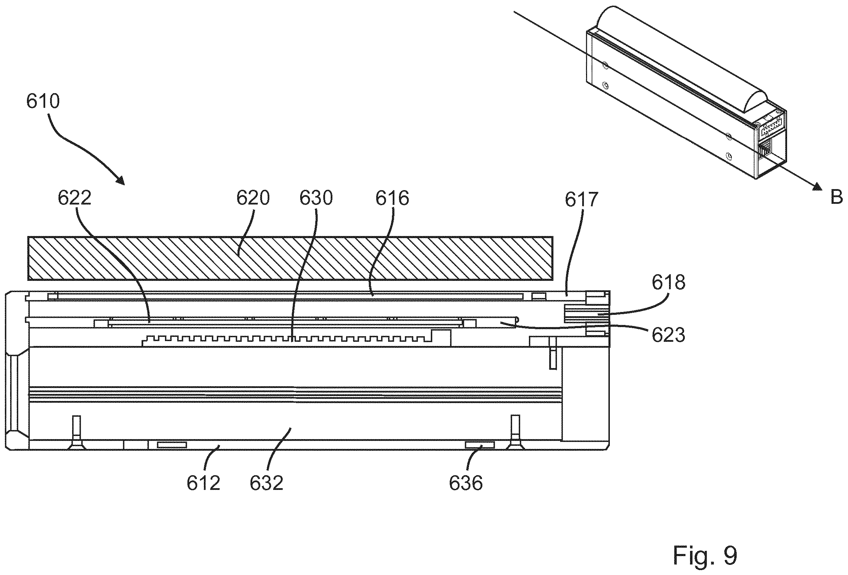

- 10: Dosiervorrichtung
- 1: Ventil
- 2: Gehäuse
- 3: Auslauf-/Entlüftungsöffnung
- 4: Röhrchen
- 5: Druckkammer
- 6: Zuführöffnung
- 7: Halterung
- 8: Ummantelung
- 60: Mikrotiterplatte
- 62: Plattenhalter
- 64: Vorratsgefäß
- 65: Flüssigkeit
- 66: Pumpe
- 68: Druckleitung
- 70: Leitung
- 71: Leitung
- 72: Ventil
- 82: Kamera
- 84: Emissionsfilter
- 85: Polarisationsfilter
- 90: Strahlungsteiler
- 92: Anregungslicht
- 94: Fluoreszenzlicht
- 610: LED-Lichtmodul
- 612: Gehäuse
- 613: Vordere Gehäuseabdeckung mit Kühllufteinstromöffnung
- 614: Ventilatorposition für Kühlluftansaugung
- 615: Gehäuseboden
- 616: Schutzglas bzw. Polarisationsfilter
- 617: Schutzglashalterung
- 618: Elektrischer Anschluss
- 620: Zylinderlinse
- 622: Anregungsfilter
- 623: Filterhalterung
- 630: LED-Platine
- 631: LED
- 632: Kühlkörper
- 634: RFID-Transponder
- 636: Haltemagnet
- 660: Triggersignal
- 662: Spannungsverlauf der LED Emission in Fig. 10 b)
- 664: Spannungsverlauf der LED Emission in Fig. 10 d)
- 666: Zeit-Achse in Fig. 10
- A: Schnittachse für Fig. 8
- B: Schnittachse für Fig. 9

## Patentansprüche

1. Verfahren zur Messung im Hochdurchsatz-Screening mit hoher Zeitauflösung enthaltend die Schritte:
a. Bereitstellung von
i. einer Mikrotiterplatte (60) mit einem transparenten Boden mit einer Vielzahl von Testvertiefungen,
ii. einem oberhalb der Mikrotiterplatte angeordneten Dosiersystem zur gleichzeitigen Zugabe von Flüssigkeit in mehrere Testvertiefungen, wobei das Dosiersystem eine Dosiervorrichtung (10) umfasst und die Dosiervorrichtung ein Gehäuse (2) mit mindestens einer Druckkammer (5), einer Zuführöffnung (6) für die Zuführung von Flüssigkeit in die Druckkammer (5) und einer Vielzahl von Durchlässen zwischen der Druckkammer (5) und einer Außenseite des Gehäuses (2) aufweist, wobei sich in jedem der Durchlässe ein Röhrchen (4) befindet, das mit seinem ersten Ende in die Druckkammer (5) hinein ragt und mit seinem zweiten Ende an der Außenseite aus dem Gehäuse (2) herausragt;
iii. einem Beleuchtungssystem unterhalb der Mikrotiterplatte (60), das geeignet ist die mehreren Testvertiefungen gleichzeitig durch den transparenten Boden zu beleuchten; und
iv. einem Detektionssystem, das geeignet ist elektromagnetische Strahlung aus den mehreren oder allen Testvertiefungen gleichzeitig durch den transparenten Boden zu detektieren.
b. Zugabe von 0,3 - 300 µl Flüssigkeit pro Testvertiefung aus dem Dosiersystem in die mehreren Testvertiefungen gleichzeitig innerhalb von 5-200 ms bei einem Druck im Bereich von 50 kPa (0,5 bar) bis 200 kPa (2 bar).
c. Beleuchtung der mehreren Testvertiefungen gleichzeitig durch den transparenten Boden mit dem Beleuchtungssystem mit Beleuchtungsbeginn vor oder ab dem Zeitpunkt des Beginns der Zugabe;
d. Detektion der elektromagnetischen Strahlung aus den mehreren oder allen Testvertiefungen gleichzeitig mit einem zeitlichen Abstand von 1 - 1000 ms zwischen den einzelnen Messpunkten.

2. Verfahren nach Anspruch 1, **dadurch gekennzeichnet, dass** das Dosiersystem geeignet ist in 24 oder 48 Testvertiefungen gleichzeitig Flüssigkeit zuzugeben.

3. Verfahren nach einem der Ansprüche 1 oder 2, **dadurch gekennzeichnet, dass** die Zugabe der Flüssigkeit durch das Dosiersystem mit einem Druck im Bereich von 50 kPa (0,5 bar) bis 85 kPa (0,85 bar), bevorzugt bei 80 kPa (0,8 bar) erfolgt.

4. Verfahren nach einem der Ansprüche 1 bis 3, **dadurch gekennzeichnet, dass** die Zugabe der Flüssigkeit durch das Dosiersystem diagonal oder parallel zu den Seitenwänden der Testvertiefungen der Mikrotiterplatte erfolgt.

5. Verfahren nach einem der Ansprüche 1 bis 4, **dadurch gekennzeichnet, dass** die Beleuchtung durch mehrere LED-Lichtmodule (610) mit unterschiedlicher Wellenlänge, zur Aktivierung von lichtempfindlichen Proteinen und/oder Anregung einer Fluoreszenzmessung, erfolgt.

6. Verfahren nach einem der Ansprüche 1 bis 5, **dadurch gekennzeichnet, dass** die LED-Lichtmodule LED-Lichtquellen (631) aufweisen und bevorzugt auch Extinktionsfilter aufweisen, wobei die LED-Lichtquellen (631) im Wellenlängenbereich von 340 bis 800 Nanometer emittieren

7. Verfahren nach einem der Ansprüche 1 bis 6, **dadurch gekennzeichnet, dass** die Detektion des emittierten Lichts bei verschiedenen Wellenlängen gleichzeitig erfolgt.

8. System für schnelle kinetische Messungen im Hochdurchsatz-Screening mit hoher Zeitauflösung enthaltend
a. eine Mikrotiterplatte (60) mit einem transparenten Boden mit einer Vielzahl von Testvertiefungen,
b. ein oberhalb der Mikrotiterplatte (60) angeordnetes Dosiersystem zur gleichzeitigen Zugabe von Flüssigkeit in mehrere Testvertiefungen;
c. ein Beleuchtungssystem unterhalb der Mikrotiterplatte (60), das geeignet ist die mehreren Testvertiefungen gleichzeitig durch den transparenten Boden zu beleuchten; und
d. ein Detektionssystem, das geeignet ist elektromagnetische Strahlung aus den mehreren oder allen Testvertiefungen gleichzeitig durch den transparenten Boden zu detektieren;
wobei die Dosiervorrichtung (10) ein Gehäuse (2) mit mindestens einer Druckkammer (5), einer Zuführöffnung (6) für die Zuführung von Flüssigkeit in die Druckkammer (5) und einer Vielzahl von Durchlässen zwischen der Druckkammer (5) und einer Außenseite des Gehäuses (2) aufweist, wobei sich in jedem der Durchlässe ein Röhrchen (4) befindet, das mit seinem ersten Ende in die Druckkammer (5) hinein ragt und mit seinem zweiten Ende an der Außenseite aus dem Gehäuse (2) herausragt.

9. System nach Anspruch 8, **dadurch gekennzeichnet, dass** die Durchlässe der mindestens einen Druckkammer (5) in einer oder zwei Reihen parallel zur einer Längsachse der Druckkammer (5) verlaufen und 24 oder 48 Durchlässe pro Reihe vorhanden sind.

10. System nach einem der Ansprüche 8 oder 9, **dadurch gekennzeichnet, dass** das Dosiersystem weiterhin ein Flüssigkeitsreservoir (64) aufweist, das über eine Leitung mit der Zuführöffnung (6) der Dosiervorrichtung (10) verbunden ist, wobei das Flüssigkeitsreservoir (64) druckdicht von der umgebenden Atmosphäre abgeschlossen und mit einer Pumpe (66) verbunden ist.

11. System nach Anspruch 10, **dadurch gekennzeichnet, dass** ein Ventil (72) zwischen dem Flüssigkeitsreservoir (64) und der Zuführöffnung (6) der Druckkammer (10) angeordnet ist und bevorzugt eine Schaltzeit im Bereich von 5 ms bis 200 ms, besonders bevorzugt im Bereich von 5 ms bis 50 ms hat.

12. System nach Anspruch 11, **dadurch gekennzeichnet, dass** die Flüssigkeit aus dem Flüssigkeitsreservoir unter einem Druck im Bereich von 50 kPa (0,5 bar) bis 200 kPa (2 bar), bevorzugt im Bereich von 50 kPa (0,5 bar) bis 85 kPa (0,85 bar) am Ventil anliegt.

13. System nach einem der Ansprüche 8 bis 12, **dadurch gekennzeichnet, dass** das Beleuchtungssystem ein Paar von LED-Lichtmodulen (610) mit jeweils 12 bis 36 Hochleistungs-LED-Lichtquellen (631) aufweist, die an einander gegenüberliegenden Seiten unterhalb der Mikrotiterplatte (60) angeordnet sind und den Boden der Mikrotiterplatte unter einem Winkel im Bereich von 20 bis 80 Grad beleuchten, wobei die Hochleistungs- LED-Lichtquellen (631) bevorzugt im Wellenlängenbereich von 340-800 Nanometer emittieren und besonders bevorzugt Extinktionsfilter aufweisen.

14. System nach einem der Ansprüche 8 bis 13, **dadurch gekennzeichnet, dass** das Beleuchtungssystem mehrere LED-Lichtmodule (610) mit unterschiedlicher Wellenlänge aufweist.

15. System nach einem der Ansprüche 8 bis 14, **dadurch gekennzeichnet, dass** die Detektion des emittierten Lichts unter einem rechten Winkel zum Boden der Mikrotiterplatte (60) erfolgt und das Detektionssystem mittig unter der Mikrotiterplatte (60) platziert ist.

## Claims

1. Method for measurement in high-throughput screening with high time-resolution, comprising the steps of:
a. providing
i. a microtitre plate (60) having a transparent base with a multiplicity of assay wells,
ii. a dispensing system arranged above the microtitre plate for the simultaneous addition of liquid into multiple assay wells, the dispensing system comprising a dispensing device (10) and the dispensing device comprising a housing (2) having at least one pressure chamber (5), having a supply opening (6) for the supply of liquid into the pressure chamber (5) and having a multiplicity of conduits between the pressure chamber (5) and an external side of the housing (2), there being situated in each of the conduits a tube (4), the first end of which protrudes into the pressure chamber (5) and the second end of which protrudes out of the housing (2) on the external side;
iii. an illumination system beneath the microtitre plate (60) that is suitable for illuminating the multiple assay wells simultaneously through the transparent base; and
iv. a detection system that is suitable for detecting electromagnetic radiation from the multiple or all the assay wells simultaneously through the transparent base.
b. adding 0.3 - 300 µl of liquid per assay well from the dispensing system into the multiple assay wells simultaneously within 5-200 ms at a pressure within the range from 50 kPa (0.5 bar) to 200 kPa (2 bar).
c. illuminating the multiple assay wells simultaneously through the transparent base using the illumination system with the start of illumination before or from the time point of the start of the addition;
d. detecting the electromagnetic radiation from the multiple or all the assay wells simultaneously at a time interval of 1 - 1000 ms between the individual measurement points.

2. Method according to Claim 1, **characterized in that** the dispensing system is suitable for simultaneously adding liquid into 24 or 48 assay wells.

3. Method according to either of Claims 1 and 2, **characterized in that** the addition of the liquid by the dispensing system is done at a pressure within the range from 50 kPa (0.5 bar) to 85 kPa (0.85 bar), preferably at 80 kPa (0.8 bar).

4. Method according to any of Claims 1 to 3, **characterized in that** the addition of the liquid by the dispensing system is done diagonally or parallel to the side walls of the assay wells of the microtitre plate.

5. Method according to any of Claims 1 to 4, **characterized in that** the illumination is done by multiple LED light modules (610) with differing wavelength for the activation of light-sensitive proteins and/or excitation of a fluorescence measurement.

6. Method according to any of Claims 1 to 5, **characterized in that** the LED light modules comprise LED light sources (631) and preferably also comprise extinction filters, the LED light sources (631) emitting within the wavelength range from 340 to 800 nanometres.

7. Method according to any of Claims 1 to 6, **characterized in that** the detection of the emitted light is done simultaneously at various wavelengths.

8. System for rapid kinetic measurements in high-throughput screening with high time-resolution, comprising
a. a microtitre plate (60) having a transparent base with a multiplicity of assay wells,
b. a dispensing system arranged above the microtitre plate (60) for the simultaneous addition of liquid into multiple assay wells;
c. an illumination system beneath the microtitre plate (60) that is suitable for illuminating the multiple assay wells simultaneously through the transparent base; and
d. a detection system that is suitable for detecting electromagnetic radiation from the multiple or all the assay wells simultaneously through the transparent base;
the dispensing device (10) comprising a housing (2) having at least one pressure chamber (5), having a supply opening (6) for the supply of liquid into the pressure chamber (5) and having a multiplicity of conduits between the pressure chamber (5) and an external side of the housing (2), there being situated in each of the conduits a tube (4), the first end of which protrudes into the pressure chamber (5) and the second end of which protrudes out of the housing (2) on the external side.

9. System according to Claim 8, **characterized in that** the conduits of the at least one pressure chamber (5) run in one or two rows parallel to a longitudinal axis of the pressure chamber (5) and there are 24 or 48 conduits per row.

10. System according to either of Claims 8 and 9, **characterized in that** the dispensing system additionally comprises a liquid reservoir (64) which is connected to the supply opening (6) of the dispensing device (10) via a line, the liquid reservoir (64) being closed off from the surrounding atmosphere in a pressure-tight manner and being connected to a pump (66).

11. System according to Claim 10, **characterized in that** a valve (72) is arranged between the liquid reservoir (64) and the supply opening (6) of the pressure chamber (10) and preferably has a switching time within the range from 5 ms to 200 ms, particularly preferably within the range from 5 ms to 50 ms.

12. System according to Claim 11, **characterized in that** the liquid from the liquid reservoir rests against the valve under a pressure within the range from 50 kPa (0.5 bar) to 200 kPa (2 bar), preferably within the range from 50 kPa (0.5 bar) to 85 kPa (0.85 bar) .

13. System according to any of Claims 8 to 12, **characterized in that** the illumination system comprises a pair of LED light modules (610) with, in each case, 12 to 36 high-output LED light sources (631) that are arranged beneath the microtitre plate (60) on opposite sides and illuminate the base of the microtitre plate at an angle within the range from 20 to 80 degrees, the high-output LED light sources (631) preferably emitting within the wavelength range of 340-800 nanometres and particularly preferably comprising extinction filters.

14. System according to any of Claims 8 to 13, **characterized in that** the illumination system comprises multiple LED light modules (610) with differing wavelength.

15. System according to any of Claims 8 to 14, **characterized in that** the detection of the emitted light is done at a right angle to the base of the microtitre plate (60) and the detection system is positioned centrally under the microtitre plate (60) .

## Revendications

1. Procédé de mesure dans le criblage à haut débit et à haute résolution temporelle, ledit procédé comprenant les étapes suivantes :
a. fournir
i. une plaque microtitre (60) comprenant un fond transparent pourvu d'un grand nombre de puits de test,
ii.un système de dosage disposé au-dessus de la plaque microtitre et destiné à ajouter simultanément un liquide dans une pluralité de puits de test, le système de dosage comprenant un dispositif de dosage (10) et le dispositif de dosage comportant un boîtier (2) pourvu d'au moins une chambre de pression (5), d'un orifice d'alimentation (6) destiné à alimenter la chambre de pression (5) en liquide et d'un grand nombre de passages ménagés entre la chambre de pression (5) et un côté extérieur du boîtier (2), un petit tube (4) étant situé dans chacun des passages, lequel petit tube fait saillie avec sa première extrémité dans la chambre de pression (5) et fait saillie avec sa deuxième extrémité hors du boîtier (2) du côté extérieur ;
iii. un système d'éclairage sous la plaque microtitre (60) qui est conçu pour éclairer simultanément la pluralité de puits de test à travers le fond transparent ; et
iv.un système de détection qui est conçu pour détecter un rayonnement électromagnétique provenant de la pluralité ou de la totalité des puits de test simultanément à travers le fond transparent,
b. ajouter 0,3 à 300 µl de liquide par puits de test à partir du système de dosage dans la pluralité de puits de test simultanément en 5 à 200 ms à une pression dans la gamme allant de 50 kPa (0,5 bar) à 200 kPa (2 bar),
c. éclairer la pluralité de puits de test simultanément à travers le fond transparent à l'aide du système d'éclairage avec un début d'éclairage avant l'instant du début de l'ajout ou à partir de celui-ci ;
d. détecter le rayonnement électromagnétique provenant de la pluralité ou de la totalité des puits de test simultanément avec un intervalle de temps de 1 à 1000 ms entre les points de mesure individuels.

2. Procédé selon la revendication 1, **caractérisé en ce que** le système de dosage est conçu pour ajouter du liquide simultanément dans 24 ou 48 puits de test.

3. Procédé selon l'une des revendications 1 et 2, **caractérisé en ce que** l'ajout du liquide est effectué par le système de dosage à une pression dans la gamme de 50 kPa (0,5 bar) à 85 kPa (0,85 bar), de préférence à 80 kPa (0,8 bar).

4. Procédé selon l'une des revendications 1 à 3, **caractérisé en ce que** l'ajout du liquide est effectué par le système de dosage diagonalement ou parallèlement aux parois latérales des puits de test de la plaque microtitre.

5. Procédé selon l'une des revendications 1 à 4, **caractérisé en ce que** l'éclairage est effectué par une pluralité de modules de lumière à LED (610) de longueurs d'onde différentes afin d'activer des protéines photosensibles et/ou de démarrer une mesure de fluorescence.

6. Procédé selon l'une des revendications 1 à 5, **caractérisé en ce que** les modules de lumière à LED comportent des sources de lumière à LED (631) et de préférence comportent également des filtres d'extinction, les sources de lumière à LED (631) émettant dans la gamme de longueurs d'onde allant de 340 à 800 nanomètres.

7. Procédé selon l'une des revendications 1 à 6, **caractérisé en ce que** la détection de la lumière émise est effectuée simultanément à différentes longueurs d'onde.

8. Système de mesures cinétiques rapides dans le criblage à haut débit et à haute résolution temporelle, ledit système contenant
a. une plaque microtitre (60) comprenant un fond transparent pourvu d'un grand nombre de puits de test,
b. un système de dosage qui est situé au-dessus de la plaque microtitre (60) et qui est destiné à ajouter du liquide simultanément dans une pluralité de puits de test ;
c. un système d'éclairage au-dessous de la plaque microtitre (60) qui est conçu pour éclairer la pluralité de puits de test simultanément à travers le fond transparent ; et
d. un système de détection qui est conçu pour détecter un rayonnement électromagnétique provenant de la pluralité ou de la totalité des puits de test simultanément à travers le fond transparent ;
le dispositif de dosage (10) comportant un boîtier (2) pourvu d'au moins une chambre de pression (5), d'un orifice d'alimentation (6) destiné à alimenter la chambre de pression (5) en liquide et d'un grand nombre de passages ménagés entre la chambre de pression (5) et un côté extérieur du boîtier (2), un petit tube (4) étant placé dans chacun des passages, lequel petit tube fait saillie avec sa première extrémité dans la chambre de pression (5) et fait saillie avec sa deuxième extrémité hors du boîtier (2) du côté extérieur.

9. Système selon la revendication 8, **caractérisé en ce que** les passages de l'au moins une chambre de pression (5) s'étendent en une ou deux rangées parallèlement à un axe longitudinal de la chambre de pression (5) et 24 ou 48 passages par rangée sont présents.

10. Système selon l'une des revendications 8 et 9, **caractérisé en ce que** le système de dosage comporte en outre un réservoir de liquide (64) qui est relié par une conduite à l'orifice d'alimentation (6) du dispositif de dosage (10), le réservoir de liquide (64) étant isolé de manière étanche à la pression de l'atmosphère environnante et relié à une pompe (66).

11. Système selon la revendication 10, **caractérisé en ce qu'**une vanne (72) est disposée entre le réservoir de liquide (64) et l'orifice d'alimentation (6) de la chambre de pression (10) et a de préférence un temps de commutation dans la gamme allant de 5 ms à 200 ms, de manière particulièrement préférée dans la gamme de 5 ms à 50 ms.

12. Système selon la revendication 11, **caractérisé en ce que** le liquide provenant du réservoir de liquide est appliqué à la vanne à une pression dans la gamme allant de 50 kPa (0,5 bar) à 200 kPa (2 bar), de préférence dans la gamme allant de 50 kPa (0,5 bar) à 85 kPa (0,85 bar).

13. Système selon l'une des revendications 8 à 12, **caractérisé en ce que** le système d'éclairage comporte une paire de modules de lumière à LED (610) comprenant chacun 12 à 36 sources de lumière à LED de forte puissance (631) qui sont disposées sur des côtés opposés au-dessous de la plaque microtitre (60) et qui éclairent le fond de la plaque microtitre suivant un angle dans la gamme allant de 20 à 80 degrés, les sources de lumière à LED à haute puissance (631) émettant de préférence dans la gamme de longueurs d'onde de 340-800 nanomètres et comportant de manière particulièrement préférée des filtres d'extinction.

14. Système selon l'une des revendications 8 à 13, **caractérisé en ce que** le système d'éclairage comporte une pluralité de modules de lumière à LED (610) de différentes longueurs d'onde.

15. Système selon l'une des revendications 8 à 14, **caractérisé en ce que** la détection de la lumière émise est effectuée à un angle droit par rapport au fond de la plaque microtitre (60) et le système de détection est placé au centre au-dessous de la plaque microtitre (60).
